# FASCICULE DE BREVET EUROPEEN

(11) **EP 1 507 747 B1**
(45) Date de publication et mention de la délivrance du brevet: **14.09.2011**
(21) Numéro de dépôt: 03755053.0
(22) Date de dépôt: 21.05.2003
(51) Int. Cl.: C03C 25/14, C03B 37/04

(54) **MEDIA FILTRANT COMPRENANT DES FIBRES MINERALES OBTENUES PAR CENTRIFUGATION**
FILTERMEDIUM; ENTHALTEND MITTELS ZENTRIFUGATION ERHALTENE MINERALFASERN
FILTERING MEDIUM COMPRISING MINERAL FIBRES OBTAINED BY MEANS OF CENTRIFUGATION

(30) Priorité: 27.05.2002 FR 0206547
(43) Date de publication de la demande: 23.02.2005
(73) Titulaire: SAINT-GOBAIN ISOVER, 92400 Courbevoie (FR)
(72) Inventeur: MORCRETE, Alice, F-80000 Amiens (FR); MARICOURT, Jean-pierre, F-60200 Compiegne (FR); PIERUCCI, Laurent, 28816 Camarma de Esteruelas, Madrid (ES); NOUSIAINEN, Eerik, F-60270 GOUVIEUX (FR); DEPUILLE, Jean-Dominique, F-60600 Boulincourt (FR); VANDENHECKE, Eric, F-60140 Mogneville (FR)
(74) Mandataire: Jamet, Vincent
(86) Numéro de dépôt international: PCT/FR2003/001530
(87) Numéro de publication internationale: WO 2003/099736

(56) Documents cités:
- EP-A- 1 182 177
- FR-A- 2 745 597
- FR-A- 2 779 713

## Description

L'invention concerne un média filtrant pour la réalisation de filtres notamment un filtre à poche et son procédé de fabrication. L'invention concerne notamment les filtres à poche dits fins et de haute efficacité des classes F5 à F9 selon la norme EN 779, pour la filtration de gaz et plus particulièrement l'air (élimination des particules en suspension dans l'air).

On sait faire des filtres à poche (« pocket filters » en anglais) répondant à la norme ci-dessus citée à partir de média filtrant préparées par le procédé dit « Aerocor » selon lequel des fibres sont étirées à l'horizontal dans une flamme horizontale à fort débit gazeux à partir de bâtonnets de verre verticaux, voir US 5 800 586. Après formation, les fibres sont recueillis en nappe sur un tapis muni d'orifices, ledit tapis étant incliné par rapport à l'horizontale. Cependant, on cherche à améliorer l'efficacité de ces filtres et à baisser la perte de charge qu'ils occasionnent.

Le média filtrant selon l'invention est préparé par un procédé comprenant les étapes suivantes :
- formation des fibres par un dispositif mettant en oeuvre le procédé dit de centrifugation interne, puis
- pulvérisation d'un précurseur d'un liant sur les fibres, puis
- réception des fibres sur un voile, puis
- traitement thermique de l'ensemble comprenant les fibres et le voile selon une épaisseur contrôlée de façon à transformer le précurseur de liant en liant.

Le média filtrant ainsi obtenu comprend un feutre comprenant les fibres minérales liées, ledit feutre étant collé au voile. Le précurseur d'un liant pulvérisé juste après l'étirage des fibres se transforme en liant lors du traitement thermique, ledit liant servant d'une part à lier les fibres entre elles pour leur donner une structure de feutre, et servant d'autre part au collage du feutre sur le voile.

Généralement, pour la réception des fibres sur le voile, celui-ci est placé sur une bande perméable aux gaz, lesdites fibres étant dirigées sur ledit voile grâce à une aspiration s'exerçant à travers ledit voile et ladite bande.

Pour une masse surfacique donnée, le média filtrant selon l'invention oppose une faible perte de charge au gaz qui le traverse. Il en est de même avec les filtres réalisés avec le média filtrant selon l'invention.

De plus, pour une masse surfacique donnée, le média filtrant selon l'invention présente une forte capacité de rétention (également appelée capacité de colmatage) de particules. On admet généralement qu'un filtre à poche est usé (c'est-à-dire bouché de façon trop importante par les poussières qu'il a filtré) lorsqu'il provoque une perte de charge de 450 Pascal au gaz. La capacité de rétention est donc la masse surfacique de poussières que contient le filtre lorsqu'il provoque ladite perte de charge de 450 Pascal. Cet avantage du média filtrant selon l'invention permet d'utiliser un plus faible grammage tout en conservant une forte capacité de rétention et occasionnant une faible perte de charge.

Les remarquables propriété du média filtrant selon l'invention proviennent probablement de la structure particulière du réseau de fibre. Notamment, et sans que cette explication ne puisse limiter la portée de la présente demande, les fibres pourraient présenter une orientation particulièrement aléatoire.

Le principe du procédé de centrifugation interne est bien connu en lui-même de l'homme du métier. Schématiquement, ce procédé consiste à introduire un filet de matière minérale fondue dans un centrifugeur, encore appelé assiette de fibrage, tournant à grande vitesse et percé à sa périphérie par un très grand nombre d'orifices par lesquels la matière fondue est projetée sous forme de filaments sous l'effet de la force centrifuge. Ces filaments sont alors soumis à l'action d'un courant annulaire d'étirage à température et vitesse élevées longeant la paroi du centrifugeur, courant qui les amincit et les transforme en fibres. Les fibres formées sont entraînées par ce courant gazeux d'étirage vers un dispositif de réception généralement constitué par une bande perméable aux gaz. Ce procédé connu a fait l'objet de nombreux perfectionnements dont notamment ceux enseignés dans les demandes de brevet européen N° EP 0189534, EP 0519797 ou EP 1087912.

Dans le procédé selon l'invention, les orifices de l'assiette doivent présenter un diamètre suffisamment petit pour que les fibres obtenues par le procédé de centrifugation interne présentent un indice de finesse d'au plus 12 litres par minute, de préférence d'au plus 10 litres par minute, et généralement d'au moins 0,4 litre par minute, ledit indice de finesse étant mesurée par la technique décrite dans la demande de brevet français FR 2 840 071 déposée le 22 mai 2002. Cette demande de brevet concerne en effet un dispositif de détermination de l'indice de finesse de fibres comportant un dispositif de mesurage de l'indice de finesse, ledit dispositif de mesurage de l'indice de finesse étant pourvu d'une part, d'au moins un premier orifice relié à une cellule de mesure adaptée pour recevoir un échantillon constitué d'une pluralité de fibres et d'autre, part, d'un second orifice relié à un dispositif de mesurage d'une pression différentielle située de part et d'autre dudit échantillon, ledit dispositif de mesurage de la pression différentielle étant destiné à être relié à un dispositif de production d'écoulement de fluide, caractérisé en ce que le dispositif de mesurage de l'indice de finesse comporte au moins un débitmètre volumétrique du fluide traversant ladite cellule. Ce dispositif donne des correspondances entre des valeurs « micronaire » et des litres par minute, dès lors que la fibre est suffisamment épaisse pour que des valeurs micronaire existent. Pour des fibres très fines telles que celles utilisées dans le cadre de la présente invention, une finesse peut être mesurée en l/min grâce à la technique du brevet sus-mentionné alors même qu'aucune valeur « micronaire » n'existe.

Pour obtenir les fibres à la finesse requise, on peut notamment utiliser comme dispositif mettant en oeuvre le procédé de centrifugation interne celui décrit dans la demande de brevet N° EP 1087912. Généralement, les orifices de l'assiette présentent un diamètre allant de 0,3 à 0,9 mm et plus généralement allant de 0,4 à 0,8 mm. Pour une assiette de diamètre 400 mm, celle-ci peut comprendre 1500 à 15000 orifices. Ces orifices peuvent être disposés sur la bande périphérique de l'assiette en une multitude de rangées horizontales se superposant, par exemple 5 à 20 rangées. L'assiette peut avoir un diamètre différent de 400 mm, par exemple 600 mm, et le nombre d'orifice varie en rapport de ce que le changement de diamètre implique sur la surface de la bande périphérique de l'assiette, de sorte que le nombre d'orifices par unité de surface reste sensiblement celle que l'on a dans le cas précis des 1500 à 15000 orifices pour une assiette de diamètre 400 mm. Des fibres plus fines sont obtenues si l'on diminue le diamètre des orifices de l'assiette et/ou si l'on augmente leur étirement.

De préférence, le dispositif est muni d'un brûleur interne. De préférence, le dispositif est réglé de façon à procurer une faible tirée par orifice. Juste après fibrage, les fibres sont étirées dans un brûleur, par exemple un brûleur à boucle, notamment du type brûleur tangentiel. De préférence, le dispositif est muni d'un brûleur tangentiel, c'est-à-dire présentant une composante tangentielle étirant les fibres pour aboutir à leur diamètre final (de l'ordre généralement d'environ 1 µm), notamment comme décrit dans la demande de brevet N° EP 0189354.

De préférence, le fibrage est réglé pour que la tirée aille de 0,1 à 1 kg par orifice de l'assiette et par jour.

De préférence, l'assiette de fibrage est sans fond et est combinée à un panier comme dans la demande de brevet N° EP 0189354.

Le procédé selon l'invention permet une fabrication en continu de bandes du média filtrant selon l'invention. Un tel procédé consomme une faible quantité de combustible pour une productivité importante, comparé au procédé dit Aerocor. Une productivité de l'ordre de 200 à 5000 kg par jour peut être atteinte. Une productivité de 1000 kg / jour pour une consommation de l'ordre de 3 à 10 Nm³/h de gaz combustible peut être atteinte, contre une productivité de 120 kg/jour et une consommation de 100 Nm³/h de gaz combustible dans le cas du procédé Aerocor. L'énergie totale pour fibrer 1 kg de fibres de verre est de l'ordre de 20 kW/h avec le procédé de centrifugation interne, alors qu'elle est de 85 kW/h pour le procédé Aerocor.

Le précurseur du liant pulvérisé peut être du type phénolique ou acrylique ou époxy. Selon sa nature, ce précurseur peut être pulvérisé sous la forme d'une solution ou d'une émulsion. La masse pulvérisé contient généralement une forte proportion d'eau, par exemple allant de 70 à 98 % d'eau, notamment de l'ordre de 90% d'eau. Le reste de la masse pulvérisée comprend le précurseur du liant et éventuellement une huile et éventuellement des additifs comme par exemple un silane pour optimiser l'interface entre la fibre et le liant, ou un biocide. La somme des quantités d'huile et d'additif va généralement de 0 à 5 % en poids de la masse de précurseur, notamment de 1 à 3 % en poids de la masse de précurseur. L'huile peut notamment être celle de marque Mulrex 88 commercialisée par la société Exxon Mobil.

La matière minérale que l'on transforme en fibre est généralement du verre. Tout type de verre transformable par le procédé dit de centrifugation interne peut convenir. Il peut notamment s'agir d'un verre borosilicocalcique, et notamment un verre biosoluble.

Le voile est généralement en polyester ou en polypropylène ou en verre et présente généralement une masse surfacique (ou grammage) allant de 5 à 100 g/m².

Le traitement thermique sert à transformer le précurseur de liant en liant en provoquant les réactions chimiques de solidification (réticulation ou polymérisation) et en évaporant les espèces volatiles (solvant, produits de réaction, etc.). A l'issu de ce traitement thermique, les fibres sont liées entre elles dans le feutre et le feutre est lié au voile. Cette opération est réalisée avec maintien de l'épaisseur du média-filtrant pendant la réaction de solidification, ce qui est généralement réalisé en maintenant l'ensemble feutre/voile entre deux tapis défilant placés à une distance constante l'un de l'autre, ladite distance correspondant à celle souhaitée pour l'épaisseur totale du média filtrant. Cette épaisseur peut par exemple aller de 4 à 12 mm, par exemple environ 7 mm.

Le média filtrant final, pouvant être sous forme de bande et constitué du feutre comprenant les fibres minérales, du voile et de liant comprend généralement :
- 10 à 25 % en poids de liant + huile (le cas échéant) + additif(s) (le cas échéant),
- 10 à 50 % en poids de voile,
- 25 à 80 % en poids de matière minérale, généralement du verre.

Selon ce qui vient d'être écrit, la somme de la masse de liant, d'huile et d'additif peut représenter 10 à 25 % en poids de la masse du média filtrant.

Le média filtrant final est généralement fabriqué en continu auquel cas il apparaît en bande enroulable et sa masse surfacique peut aller de 30 à 110 g/m² et plus généralement de 50 à 90 g/m². La largeur de la bande peut aller par exemple de 1 à 3 mètres. La bande de média filtrant peut ensuite être découpée en carrés ou rectangles, lesquels sont ensuite assemblés de façon connue de l'homme du métier pour réaliser des filtres à poche.

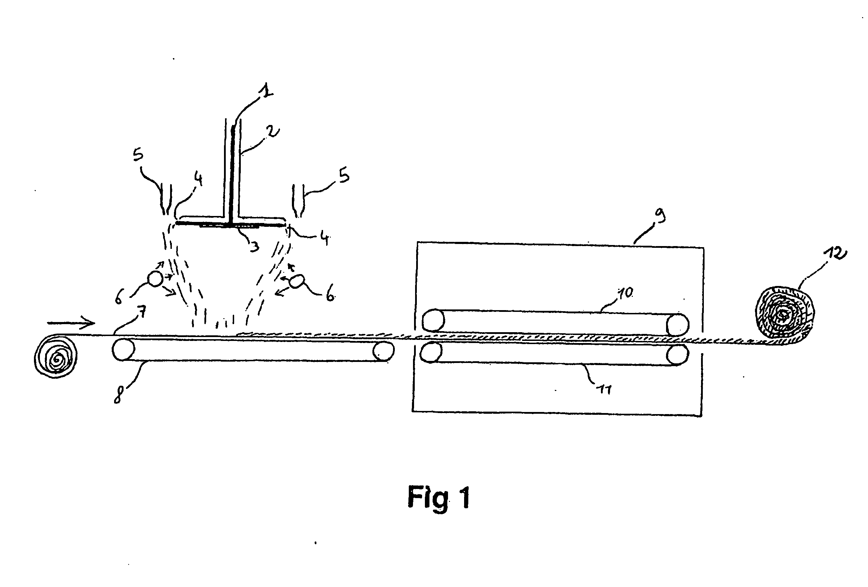

La figure 1 représente le procédé selon l'invention de façon schématique.
   Un filet de matière minérale fondue 1 tombe au centre de l'arbre creux 2 du centrifugeur, touche le panier 3, puis ladite matière est projetée par centrifugation vers l'assiette de fibrage 4 muni d'orifices. La matière fondue traverse les orifices sous forme de fibres et ces fibres sont ensuite étirées à l'aide des brûleurs tangentiels 5. Les buses de pulvérisation 6 projettent le précurseur du liant sur les fibres, lesquelles sont ensuite réceptionnées sur le voile 7, lui-même entraîné par une bande 8 perméable aux gaz. Une aspiration non représentée sur la figure 1, agit à travers la bande pour attirer et maintenir les fibre en surface du voile. L'ensemble fibres/voile est ensuite entraîné dans une étuve 9 pour la transformation du précurseur de liant en liant. Dans cette étuve, le média filtrant est enserré entre deux tapis défilant 10 et 11, distants l'un de l'autre de la distance souhaitée pour l'épaisseur finale du média filtrant. Après solidification du liant, le média filtrant selon l'invention peut être enroulé en 12. Le brûleur interne n'est pas représenté et étire les fibres en sortie de l'assiette de fibrage 4.

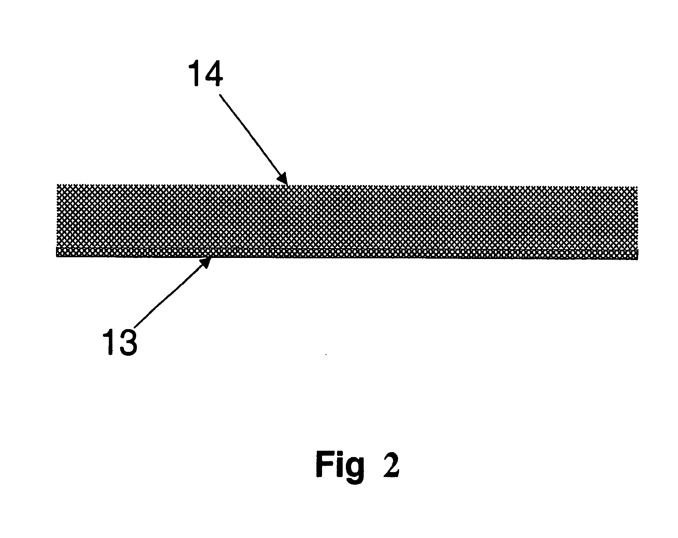

La figure 2 représente le média filtrant selon l'invention, lequel comprend un voile 13, sur lequel un feutre de fibres 14 est collé.

L'efficacité d'un filtre à poche est caractérisé par les classes F5 à F9 de la norme EN 779. Ces classes dépendent directement de l'efficacité spectrale moyenne au sens de la norme EN 779.

L'invention permet notamment la réalisation de filtres à poche présentant une efficacité spectrale moyenne allant de 80 à 90 % et présentant une capacité de rétention telle que mesurée selon la norme EN 779 avec une efficacité spectrale moyenne à 0,6 µm, d'au moins 45 g/m², et même d'au moins 50 g/m², voire d'au moins 60 g/m², et ce pour un média filtrant ayant une masse surfacique allant de 60 à 70 g/m².

L'invention permet également la réalisation de filtres à poche présentant une efficacité spectrale moyenne allant de 60 à 80 % et présentant une capacité de rétention telle que mesurée selon la norme EN 779 avec une efficacité spectrale moyenne à 0,6 µm, d'au moins 50 g/m², et même d'au moins 60 g/m², voire d'au moins 70 g/m², et ce pour un média filtrant ayant une masse surfacique allant de 70 à 90 g/m².

L'invention permet également la réalisation de filtres à poche présentant une efficacité spectrale moyenne allant de 40 à 60 % et présentant une capacité de rétention telle que mesurée selon la norme EN 779 avec une efficacité spectrale moyenne à 0,6 µm, d'au moins 60 g/m², et même d'au moins 70 g/m², et ce pour un média filtrant ayant une masse surfacique allant de 80 à 100 g/m².

### Exemples

Des bandes de média filtrant selon l'invention ont été préparées en continu. Les caractéristiques du procédé de fibrage par centrifugation interne (utilisant, comme dans EP0189354, un brûleur tangentiel, une assiette de diamètre 400 mm sans fond et avec panier) et des médias filtrants obtenus ont été rassemblées dans le tableau 1. Dans ce tableau 1, on a notamment mentionné :
- la tirée qui est la masse de verre transformée en tonnes par jours,
- la pression du brûleur tangentiel, en mm de colonne d'eau (notée mmCE),
- la finesse des fibres mesurée selon la technique décrite dans la demande de brevet français n° 0206252,
- la masse surfacique du média filtrant.

Les bandes de média filtrant ont ensuite été découpées et transformées en filtres à poche. Les propriétés de ces filtres à poche, tous testés avec une vitesse d'air de 0,13 mètre par seconde, ont été rassemblées dans le tableau 2. Dans ce tableau 2, on a notamment mentionné :
- le rendement opacimétrique initial et moyen, mesuré selon la norme EN 779,
- l'efficacité spectrale initiale et moyenne mesuré selon la norme EN 779.
- la capacité de rétention et la classe, mesurées toutes deux selon la norme EN 779.

Les propriétés de ces filtres ont été comparées à celles de filtres similaires et présentant une densité surfacique équivalente mais préparés selon le procédé dit Aerocor.

Le tableau 3 compare l'efficacité des deux types de filtres sur le plan de la capacité de rétention. On voit que dans chaque classe de filtre (F5, F6, F7), les filtres selon l'invention présentent une capacité de rétention supérieure à leur filtre de comparaison du type Aerocor, malgré des densités surfaciques équivalentes.

Une classe de filtre F8 à 90-95 % d'efficacité spectrale a également été obtenue. Cette classe présente une masse surfacique de 80 g/m² , une capacité de rétention de 55 g/m² et une efficacité spectrale moyenne de 90 %.

Une classe de filtre F9 pourrait manifestement également être atteinte avec le procédé selon l'invention.

Pour la centrifugation interne, les valeurs sont calculées avec les incertitudes suivantes :
- pour la masse surfacique : ± 2 % relatif ;
- pour la capacité de rétention : ± 10 % relatif ;
- pour l'efficacité spectrale moyenne : ± 5 % relatif.

Malgré ces incertitudes, l'intérêt de la présente invention vis-à-vis du procédé de l'art antérieur dit Aerocor est manifeste.

**Tableau 1**

| **Exemple n°** | **Nombre de trous dans l'assiette de fibrage** | **Caractéristiques des orifices de l'assiette** | **Pression du brûleur à boucle (mmCE)** | **Finesse de la fibre l/mn)** | **Masse surfacique du média filtrant (g/m²)** |
|---|---|---|---|---|---|
| **1** | 4950 | 11 rangées d'orifices aux diamètres allant de 0,6 à 0,5 mm | 440 | 10 | 90 |
| **2** | 3150 | 7 rangées d'orifices aux diamètres allant de 0,7 à 0,5 mm | 440 | 4 | 80 |
| **3** | 9880 | 13 rangées d'orifices aux diamètres allant de 0,7 à 0,5 mm | 600 | 0,6 | 65 |

**Tableau 2**

| **Exemple n°** | | **1** | **2** | **3** |
|---|---|---|---|---|
| **Perte de Charge Initiale** | **Pa** | 23 | 28 | 55 |
| **Rendement opacimétrique initial** | **%** | 27,50% | 35 | 64 |
| **Efficacité spectrale initiale à 0,6 µm** | **%** | 12% | 52 | 72 |
| **Rendement opacimétrique moyen** | **%** | 71,4 | 73,5 | 85 |
| **Efficacité spectrale moyenne à 0,6 µm** | **%** | 47,9 | 59,8 | 84.1 |
| **Capacité de rétention** | **G/m²** | 71 | 100 | 65 |
| **Classe du filtre** | | F5 | F6 | F7 |

**Tableau 3**

| | **Centrifugation interne** | | | **Aerocor** | | |
|---|---|---|---|---|---|---|
| **Classe** | **Masse surfacique (g/m²)** | **Capacité de rétention (g/m²)** | **Efficacité spectrale moyenne (%)** | **Masse surfacique (g/m²)** | **Capacité de rétention (g/m²)** | **Efficacité spectrale moyenne (%)** |
| **F5** | 90 | 71 | 47,9 | 90 | 50 | 50 |
| **F6** | 80 | 100 | 59,8 | 78 | 38 | 61 |
| **F7** | 65 | 65 | 84,1 | 65 | 33 | 86 |

## Revendications

1. Procédé de fabrication d'un média filtrant comprenant un feutre de fibres minérales lié à un voile comprenant les étapes suivantes :
- formation des fibres par un dispositif mettant en oeuvre le procédé dit de centrifugation interne comprenant une assiette de fibrage dont les orifices présentent un diamètre suffisamment petit pour que les fibres obtenues présentent un indice de finesse d'au plus 12 litres par minute (voir description, paragraphe commençant par « Dans le procédé selon l'invention, les orifices de l'assiette doivent présenter ... » et finissant par « alors même qu'aucune valeur micronaire n'existe »), puis
- pulvérisation d'un précurseur d'un liant sur les fibres, puis
- réception des fibres sur le voile, puis
- traitement thermique de l'ensemble comprenant les fibres et le voile selon une épaisseur contrôlée de façon à transformer le précurseur de liant en liant.

2. Procédé selon la revendication précédente, **caractérisé en ce que** le voile est placé sur une bande perméable aux gaz, les fibres étant dirigées sur ledit voile grâce à une aspiration s'exerçant à travers ledit voile et ladite bande.

3. Procédé selon l'une des revendications précédentes, **caractérisé en ce que** les fibres présentent une finesse d'au plus 10 litres par minute.

4. Procédé selon l'une des revendications précédentes, **caractérisé en ce que** les fibres présentent une finesse d'au moins 0,4 litre par minute.

5. Procédé selon l'une des revendications précédentes, **caractérisé en ce que** l'assiette comprend des orifices présentant un diamètre allant de 0,3 à 0,9 mm.

6. Procédé selon la revendication précédente, **caractérisé en ce que** les orifices de l'assiette présentent un diamètre allant de 0,4 à 0,8 mm.

7. Procédé selon l'une des revendications précédentes, **caractérisé en ce que** le dispositif comprend un brûleur interne.

8. Procédé selon l'une des revendications précédentes, **caractérisé en ce que** le dispositif comprend un brûleur tangentiel.

9. Procédé selon l'une des revendications précédentes, **caractérisé en ce que** l'assiette de fibrage est sans fond et est combinée à un panier.

10. Procédé selon l'une des revendications précédentes, **caractérisé en ce que** le précurseur du liant est phénolique ou acrylique ou époxy.

11. Procédé selon l'une des revendications précédentes, **caractérisé en ce que** l'épaisseur contrôlée va de 4 à 12 mm.

12. Procédé selon l'une des revendications précédentes, **caractérisé en ce que** le média filtrant final comprend
- 10 à 25 % en poids de liant + huile + additif(s),
- 10 à 50 % en poids de voile,
- 25 à 80 % en poids de matière minérale.

13. Procédé selon l'une des revendications précédentes, **caractérisé en ce que** la masse surfacique du média filtrant va de 30 à 110 g/m².

14. Procédé selon la revendication précédente, **caractérisé en ce que** la masse surfacique du média filtrant va de 50 à 90 g/m².

15. Média filtrant et notamment média filtrant pour la réalisation de filtre(s) à poche, ledit média filtrant étant fabriqué par le procédé selon l'une des revendications précédentes.

16. Filtre à poche comprenant un média filtrant et présentant une efficacité spectrale moyenne allant de 80 à 90 % telle que mesurée selon la norme EN 779 **caractérisé en ce qu'**il présente une capacité de rétention telle que mesurée selon la norme EN 779 d'au moins 45 *g*/*m²* et dont le média filtrant a une masse surfacique allant de 60 à 70 g/m² et comprend des fibres minérales présentant un indice de finesse d'au plus 12 litres par minute (voir description, paragraphe commençant par « Dans le procédé selon l'invention, les orifices de l'assiette doivent présenter ... » et finissant par « alors même qu'aucune valeur micronaire n'existe »).

17. Filtre à poche selon la revendication précédente **caractérisé en ce que** sa capacité de rétention est d'au moins 50 g/m².

18. Filtre à poche selon la revendication précédente **caractérisé en ce que** sa capacité de rétention est d'au moins 60 g/m².

19. Filtre à poche comprenant un média filtrant et présentant une efficacité spectrale moyenne allant de 60 à 80 % telle que mesurée selon la norme EN 779 **caractérisé en ce qu'**il présente une capacité de rétention telle que mesurée selon la norme EN 779 d'au moins 50 g/m² et dont le média filtrant a une masse surfacique allant de 70 à 90 g/m² et comprend des fibres minérales présentant un indice de finesse d'au plus 12 litres par minute (voir description, paragraphe commençant par « Dans le procédé selon l'invention, les orifices de l'assiette doivent présenter ... » et finissant par « alors même qu'aucune valeur micronaire n'existe »).

20. Filtre à poche selon la revendication précédente **caractérisé en ce que** sa capacité de rétention est d'au moins 60 g/m².

21. Filtre à poche selon la revendication précédente **caractérisé en ce que** sa capacité de rétention est d'au moins 70 g/m².

22. Filtre à poche comprenant un média filtrant et présentant une efficacité spectrale moyenne allant de 40 à 60 % telle que mesurée selon la norme EN 779 **caractérisé en ce qu'**il présente une capacité de rétention telle que mesurée selon la norme EN 779 d'au moins 60 g/m² et dont le média filtrant a une masse surfacique allant de 80 à 100 g/m² et comprend des fibres minérales présentant un indice de finesse d'au plus 12 litres par minute (voir description, paragraphe commençant par « Dans le procédé selon l'invention, les orifices de l'assiette doivent présenter ... » et finissant par « alors même qu'aucune valeur micronaire n'existe »).

23. Filtre à poche selon la revendication précédente **caractérisé en ce que** sa capacité de rétention est d'au moins 70 g/m².

## Claims

1. Process for manufacturing a filter medium comprising a felt of mineral fibers bonded to a web, comprising the following steps:
- formation of fibers by a device employing the process referred to as internal centrifuging that includes a fiberizing spinner dish the holes in which have a sufficiently small diameter for the fibers obtained to have a fineness index of at most 12 liters per minute (see description, paragraph starting with "In the process according to the invention, the holes in the spinner dish must have ..." and finishing with "although no micronaire value exists"); then
- spraying a precursor of a binder onto the fibers; then
- collecting the fibers on the web; and then
- heat treatment of the assembly comprising the fibers and the web with a controlled thickness so as to convert the binder precursor into a binder.

2. Process according to the preceding claim, **characterized in that** the web is placed on a gas-permeable belt, the fibers being directed onto said web by suction being applied through said web and said belt.

3. Process according to one of the preceding claims, **characterized in that** the fibers have a fineness of at most 10 liters per minute.

4. Process according to one of the preceding claims, **characterized in that** the fibers have a fineness of at least 0.4 liters per minute.

5. Process according to one of the preceding claims, **characterized in that** the spinner dish has holes with a diameter ranging from 0.3 to 0.9 mm.

6. Process according to the preceding claim, **characterized in that** the holes in the spinner dish have a diameter ranging from 0.4 to 0.8 mm.

7. Process according to one of the preceding claims, **characterized in that** the device includes an internal burner.

8. Process according to one of the preceding claims, **characterized in that** the device includes a tangential burner.

9. Process according to one of the preceding claims, **characterized in that** the fiberizing spinner dish is a bottomless spinner dish and is combined with a basket.

10. Process according to one of the preceding claims, **characterized in that** the precursor of the binder is a phenolic or an acrylic or an epoxy.

11. Process according to one of the preceding claims, **characterized in that** the controlled thickness ranges from 4 to 12 mm.

12. Process according to one of the preceding claims, **characterized in that** the final filter medium generally comprises:
- 10 to 25% by weight of binder + oil + additive(s),
- 10 to 50% by weight of web,
- 25 to 80% by weight of mineral material.

13. Process according to one of the preceding claims, **characterized in that** the weight per unit area of the filter medium ranges from 30 to 110 g/m².

14. Process according to the preceding claim, **characterized in that** the weight per unit area of the filter medium ranges from 50 to 90 g/m².

15. Filter medium, and especially a filter medium for the production of one or more pocket filters, said filter medium being manufactured by Process according to one of the preceding claims.

16. Pocket filter comprising a filter medium and having a mean spectral efficiency ranging from 80 to 90%, as measured according to the EN 779 standard, **characterized in that** it has a retention capacity, as measured according to the EN 779 standard, of at least 45 g/m², and the filter medium of which has a weight per unit area ranging from 60 to 70 g/m² and comprises mineral fibers having a fineness index of at most 12 liters per minute (see description, paragraph starting with "In the process according to the invention, the holes in the spinner dish must have ..." and finishing with "although no micronaire value exists").

17. Pocket filter **characterized in that** the preceding claim, **characterized in that** its retention capacity is at least 50 g/m².

18. Pocket filter **characterized in that** the preceding claim, **characterized in that** its retention capacity is at least 60 g/m².

19. Pocket filter comprising a filter medium and having a mean spectral efficiency ranging from 60 to 80%, as measured according to the EN 779 standard, **characterized in that** it has a retention capacity, as measured according to the EN 779 standard, of at least 50 g/m², the filter medium of which has a weight per unit area ranging from 70 to 90 *g*/*m²* and comprises mineral fibers having a fineness index of at most 12 liters per minute(see description, paragraph starting with "In the process according to the invention, the holes in the spinner dish must have ..." and finishing with "although no micronaire value exists").

20. Pocket filter **characterized in that** the preceding claim, **characterized in that** its retention capacity is at least 60 g/m².

21. Pocket filter **characterized in that** the preceding claim, **characterized in that** its retention capacity is at least 70 g/m².

22. Pocket filter comprising a filter medium and having a mean spectral efficiency ranging from 40 to 60%, as measured according to the EN 779 standard, **characterized in that** it has a retention capacity, as measured according to the EN 779 standard, of at least 60 g/m², the filter medium of which has a weight per unit area ranging from 80 to 100 g/m² and comprises mineral fibers having a fineness index of at most 12 liters per minute (see description, paragraph starting with "In the process according to the invention, the holes in the spinner dish must have ..." and finishing with "although no micronaire value exists").

23. Pocket filter **characterized in that** the preceding claim, **characterized in that** its retention capacity is at least 70 g/m².

## Patentansprüche

1. Verfahren zur Herstellung eines Filtrationsmittels, welches einen an einem Vlies gebundenen Mineralfaserfilz aufweist, mit den folgenden Schritten:
- Ausbilden der Fasern mittels einer Vorrichtung, welche das als innere Zentrifugierung bezeichnete Verfahren anwendet, mit einem Zerfaserungsteller, dessen Öffnungen einen hinreichend kleinen Durchmesser besitzen, damit die hergestellten Fasern einen Feinheitsindex von höchstens 12 Litern pro Minute besitzen (s. Beschreibung, Absatz beginnend mit "Bei dem erfindungsgemäßen Verfahren müssen die Öffnungen der Scheibe ..." und endend auf "auch wenn es hierzu keinen Micronaire-Wert gibt"), sodann
- Aufsprühen eines Vorläufers eines Bindemittels auf die Fasern, sodann
- Aufnehmen der Fasern auf dem Vlies, sodann
- thermische Behandlung der Gesamtheit aus den Fasern und dem Vlies gemäß einer kontrollierten Dicke, so dass der Bindemittel-Vorläufer in Bindemittel überführt wird.

2. Verfahren nach dem vorherigen Anspruch, **dadurch gekennzeichnet, dass** das Vlies auf einem gasdurchlässigen Band angeordnet wird, wobei die Fasern mittels einer durch das Vlies und das Band hindurch wirkenden Ansaugung auf das Vlies geleitet werden.

3. Verfahren nach einem der vorherigen Ansprüche, **dadurch gekennzeichnet, dass** die Fasern eine Feinheit von höchstens 10 Litern pro Minute besitzen.

4. Verfahren nach einem der vorherigen Ansprüche, **dadurch gekennzeichnet, dass** die Fasern eine Feinheit von mindestens 0,4 Liter pro Minute besitzen.

5. Verfahren nach einem der vorherigen Ansprüche, **dadurch gekennzeichnet, dass** der Teller Öffnungen mit einem Durchmesser von 0,3 bis 0,9 mm aufweist.

6. Verfahren nach dem vorherigen Anspruch, **dadurch gekennzeichnet, dass** die Öffnungen des Tellers einen Durchmesser von 0,4 bis 0,8 mm besitzen.

7. Verfahren nach einem der vorherigen Ansprüche, **dadurch gekennzeichnet, dass** die Vorrichtung einen internen Brenner aufweist.

8. Verfahren nach einem der vorherigen Ansprüche, **dadurch gekennzeichnet, dass** die Vorrichtung einen tangentialen Brenner aufweist.

9. Verfahren nach einem der vorherigen Ansprüche, **dadurch gekennzeichnet, dass** der Zerfaserungsteller keinen Boden aufweist und mit einem Korb kombiniert ist.

10. Verfahren nach einem der vorherigen Ansprüche, **dadurch gekennzeichnet, dass** der Vorläufer des Bindemittels vom Phenol- oder Acryl- oder Epoxidtyp ist.

11. Verfahren nach einem der vorherigen Ansprüche, **dadurch gekennzeichnet, dass** die kontrollierte Dicke von 4 bis 12 mm beträgt.

12. Verfahren nach einem der vorherigen Ansprüche, **dadurch gekennzeichnet, dass** das fertige Filtrationsmittel
- 10 bis 25 Gew.-% Bindemittel + Öl + Zusatzstoff(e),
- 10 bis 50 Gew.-% Vlies,
- 25 bis 80 Gew.-% mineralisches Material
aufweist.

13. Verfahren nach einem der vorherigen Ansprüche, **dadurch gekennzeichnet, dass** die flächenbezogene Masse des Filtrationsmittels von 30 bis 110 g/m² beträgt.

14. Verfahren nach dem vorherigen Anspruch, **dadurch gekennzeichnet, dass** die flächenbezogene Masse des Filtrationsmittels von 50 bis 90 g/m² beträgt.

15. Filtrationsmittel und insbesondere Filtrationsmittel für die Herstellung eines Beutelfilters bzw. von Beutelfiltern, wobei das Filtrationsmittel mittels des Verfahrens nach einem der vorherigen Ansprüche hergestellt wird.

16. Beutelfilter, der ein Filtrationsmittel aufweist und einen gemäß der Norm EN 779 gemessenen mittleren spektralen Wirkungsgrad von 80 bis 90% besitzt, **dadurch gekennzeichnet, dass** er ein gemäß der Norm EN 779 gemessenes Rückhaltevermögen von mindestens 45 g/m² besitzt, und dass sein Filtrationsmittel eine flächenbezogene Masse von 60 bis 70 g/m² besitzt und Mineralfasern mit einem Feinheitsindex von höchstens 12 Liter pro Minute aufweist (s. Beschreibung, Absatz beginnend mit "Bei dem erfindungsgemäßen Verfahren müssen die Öffnungen der Scheibe ..." und endend auf "auch wenn es hierzu keinen Micronaire-Wert gibt").

17. Beutelfilter nach dem vorherigen Anspruch, **dadurch gekennzeichnet, dass** sein Rückhaltevermögen mindestens 50 g/m² beträgt.

18. Beutelfilter nach dem vorherigen Anspruch, **dadurch gekennzeichnet, dass** sein Rückhaltevermögen mindestens 60 g/m² beträgt.

19. Beutelfilter, der ein Filtrationsmittel aufweist und einen gemäß der Norm EN 779 gemessenen mittleren spektralen Wirkungsgrad von 60 bis 80% besitzt, **dadurch gekennzeichnet, dass** er ein gemäß der Norm EN 779 gemessenes Rückhaltevermögen von mindestens 50 g/m² besitzt, und dass sein Filtrationsmittel eine flächenbezogene Masse von 70 bis 90 g/m² besitzt und Mineralfasern aufweist, welche einen Feinheitsindex von höchstens 12 Litern pro Minute (s. Beschreibung, Absatz beginnend mit "Bei dem erfindungsgemäßen Verfahren müssen die Öffnungen der Scheibe ..." und endend auf "auch wenn es hierzu keinen Micronaire-Wert gibt") besitzen.

20. Beutelfilter nach dem vorherigen Anspruch, **dadurch gekennzeichnet, dass** sein Rückhaltevermögen mindestens 60 g/m² beträgt.

21. Beutelfilter nach dem vorherigen Anspruch, **dadurch gekennzeichnet, dass** sein Rückhaltevermögen mindestens 70 g/m² beträgt.

22. Beutelfilter, der ein Filtrationsmittel aufweist und einen gemäß der Norm EN 779 gemessenen mittleren spektralen Wirkungsgrad von 40 bis 60% besitzt, **dadurch gekennzeichnet, dass** er ein gemäß der Norm EN 779 gemessenes Rückhaltevermögen von mindestens 60 *glm²* besitzt, und dass sein Filtrationsmittel eine flächenbezogene Masse von 80 bis 100 g/m² besitzt und Mineralfasern aufweist, welche einen Feinheitsindex von höchstens 12 Litern pro Minute besitzen (s. Beschreibung, Absatz beginnend mit "Bei dem erfindungsgemäßen Verfahren müssen die Öffnungen der Scheibe ..." und endend auf "auch wenn es hierzu keinen Micronaire-Wert gibt").

23. Beutelfilter nach dem vorherigen Anspruch, **dadurch gekennzeichnet, dass** sein Rückhaltevermögen mindestens 70 g/m² beträgt.
